# EUROPÄISCHE PATENTSCHRIFT

(11) **EP 3 057 400 B1**
(45) Veröffentlichungstag und Bekanntmachung des Hinweises auf die Patenterteilung: **13.12.2017**
(21) Anmeldenummer: 14796680.8
(22) Anmeldetag: 15.10.2014
(51) Int. Cl.: A01C 5/06, A01C 7/20

(54) **DOPPELSCHEIBENSCHAR MIT INNENLIEGENDER TIEFENFÜHRUNG**
DOUBLE-DISC PLOUGHSHARE COMPRISING AN INNERLYING DEPTH GUIDE
SOC À DOUBLE DISQUE À ÉLÉMENT INTERNE DE GUIDAGE EN PROFONDEUR

(30) Priorität: 15.10.2013 DE 102013111355
(43) Veröffentlichungstag der Anmeldung: 24.08.2016
(73) Patentinhaber: Lemken GmbH & Co. KG, 46519 Alpen (DE)
(72) Erfinder: BERENDSEN, Mark, NL-7044 AJ Lengel (NL); BERGERFURTH, Dennis, 46459 Rees (DE); GEBBEKEN, Martin, 46519 Alpen (DE); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE)
(74) Vertreter: Schulte & Schulte
(86) Internationale Anmeldenummer: PCT/DE2014/100368
(87) Internationale Veröffentlichungsnummer: WO 2015/055181

(56) Entgegenhaltungen:
- EP-A1- 2 022 307
- EP-A1- 2 554 037
- DE-A1-102008 045 132

## Beschreibung

Die Erfindung betrifft eine Anordnung von zwei Doppelscheibenscharen und einer Tiefenführungsrolle an einem Rahmen einer pneumatischen Einzelkornsämaschine.

Pneumatische Einzelkornsämaschinen werden in der Landwirtschaft eingesetzt, um das Saatgut einzeln und in gleichmäßigen Abständen in den Boden einbringen zu können. Aus der DE 10 2007 011 297 ist eine Doppelscheibenscharanordnung bekannt, bei der den Doppelscheibenscharen eine separat am Maschinenrahmen gelagerte Baugruppe nachläuft. Diese umfasst eine Tiefenführungsrolle und zwei gegenüber der Tiefenführungsrolle nach hinten versetzte, beidseitig von dieser positionierte Druckrollen. Letztere sind gemeinsam mit der Tiefenführungsrolle am Maschinenrahmen gelagert. Doppelscheibenschare und Tiefenführungsrolle drehen dabei gegeneinander, was dazu führt, dass die Schare das aufgeworfene Erdreich nach innen fördern, was zwangsläufig zu Verstopfungen und zu einem unerwünschten Bremseffekt führt. Dies gilt auch für die EP-A1-2 554 037 mit einer Anordnung von Scharen an dem Rahmen eines Bodenbearbeitungsgerätes mit einem Doppelscheibenschar und einer Tiefenführungsrolle für eine Sämaschine.

Damit stellt sich der vorliegenden Erfindung die Aufgabe, eine Anordnung einer Einzelkornsämaschine zu schaffen, welche Verstopfungen zwischen den Doppelscheibenscharen und der Tiefenführungsrolle und die damit einhergehenden Bremseffekte weitestgehend ausschließt.

Diese Aufgabe wird erfindungsgemäß dadurch gelöst, dass die Tiefenführungsrolle in Fahrtrichtung betrachtet zwischen den beiden Doppelscheibenscharen angeordnet ist, wobei die beiden Doppelscheibenschare und die Tiefenführungsrolle eine Drehbewegung in selber Richtung ausüben und die Tiefenführungsrolle und die beiden benachbarten Doppelscheibenschare sich zumindest annähernd berührend angeordnet oder ausgebildet sind, wobei die Tiefenführungsrolle und die inneren Schare der beiden benachbarten Doppelscheibenschare sich am vorderen Ende der Tiefenführungsrolle zumindest annähernd berührend angeordnet oder ausgebildet sind, wobei die Achse des Doppelscheibenschars innerhalb des Umfangs der Tiefenführungsrolle liegt oder die Achse der Tiefenführungsrolle innerhalb des Umfangs des Doppelscheibenschars liegt Im Mittelpunkt der Erfindung steht also eine Baueinheit in Form zweier als Doppelscheibenschare ausgebildeten Säschare mit einer zwischen diesen positionierten Tiefenführungsrolle. Diese ist nach vorne zwischen die beiden Doppelscheibenschare verlagert und dreht in dieselbe Richtung. Die entsprechende Anordnung begünstigt den Auswurf von Erdreich zur Seite, verhindert weitestgehend den Auswurf von Erdreich in die Mitte und schließt damit Verstopfungen praktisch aus. Ein ergänzender Vorschlag sieht vor, dass die Tiefenführungsrolle und die beiden benachbarten Doppelscheibenschare sich zumindest annähernd berührend angeordnet oder ausgebildet sind, um die angesprochenen Effekte in noch verbesserter Form zu erreichen.

Eine weitere Ausführungsform mit einer besonders günstigen Winkelstellung der Erfindung sieht vor, dass der Freiwinkel zwischen Tiefenführungsrolle und Doppelscheibenschar 0,5° bis 5,0° beträgt.

Besonders vorteilhaft ist diese Anordnung, wenn die Achse des Doppelscheibenschars und die Achse der Tiefenführungsrolle in Fahrtrichtung betrachtet zumindest annähernd auf einer Höhe liegen, maximal also um ein geringes Maß versetzt zueinander positioniert sind.

Eine weitere Maßnahme sieht vor, dass die Doppelscheibenscharpaare schräg zur Fahrtrichtung angestellt angeordnet sind, um in optimierter Weise ein Eindringen von Erdreich zwischen Scharen und Tiefenführungsrolle zu vermeiden.

Insbesondere ist daran gedacht, dass die beiden ein Doppelscheibenschar bildenden Scheiben in einem unterschiedlichen Neigungsgrad zueinander und/oder zur Fahrtrichtung angestellt angeordnet sind, d. h. die inneren Säscheiben sind in einem kleineren Winkel angestellt als die äußeren.

Eine bevorzugte Ausführungsform sieht dabei vor, dass die inneren Scheiben der jeweiligen Doppelscheibenschare annähernd parallel zur Rotationsebene der Tiefenführungsrolle angeordnet sind, um im Bereich der Tiefenführungsrolle einen störenden Auswurf von Erdreich zu vermeiden.

Zwischen dem Düngerschar und dem als Doppelscheibenschar ausgebildeten Säschar ist ein multifunktionales Arbeitsgerät in Form einer Walze oder Rolle positioniert, das in einer ersten Funktion gewissermaßen nach vorne ausgerichtet den Auswurf des Düngerschars aus der Düngerrille weitgehend auffängt und diesen oberhalb des Düngerbandes wieder rückverfestigt bzw. den Düngerschar-Schlitz wieder schließt.

In einer zweiten Funktion dient dieses Arbeitsgerät zur Vorverdichtung von Erdreich vor dem Doppelscheibenschar und ist damit gewissermaßen auch nach hinten wirkend ausgebildet. Die Walze oder Rolle dient als vorverdichtendes Werkzeug für das hinter diesem positionierte Doppelscheibenschar und somit zur Saatgutrille. Die Walze erfüllt damit eine vorteilhafte Doppelfunktion in Hinblick auf die Nachverdichtung für das ihr vorgeordnete Düngerschar und die Vorverdichtung des ihr nachgeordneten Doppelscheibenschars.

Schließlich fällt dem Arbeitsgerät ggf. eine dritte wichtige Funktion zu, wenn das Arbeitsgerät als Tiefenführungseinrichtung für die Einzelkornsämaschine ausgebildet ist. In dieser dritten Funktion schließlich dient das Arbeitsgerät zugleich als Tiefenführung für die Einzelkornsämaschine und ersetzt damit die Funktion separater Rahmenführungsräder, die nunmehr eingespart werden können.

Ergänzend dazu ist vorgesehen, dass das Arbeitsgerät als Walze mit einer Mehrzahl von über den Umfang der Walze überstehenden bzw. den äußeren Umfang der Walze bildenden, parallelen Ringen ausgerüstet ist. Zwecks Rückverfestigung für das Düngerschar und Vorverdichtung für das Doppelscheibenschar empfiehlt es sich, die Walze mit einer Mehrzahl paralleler Ringe, vorzugsweise mit zwei Ringen auszustatten, welche in ihrer Anordnung und Ausbildung mit der Dünger- bzw. Saatgutrille korrespondieren und insofern die Mehrfachfunktionen des Arbeitsgerätes maßgeblich beeinflussen und gewährleisten.

So läuft solch ein Ring zweckmäßigerweise nach außen in Art eines Dachs spitz zu. Zur Verstärkung der beschriebenen Wirkungen ist vorgesehen, dass die Ringe mehrere über ihren Umfang verteilt angeordnete und sich in deren Axialrichtung erstreckende Bodenantriebselemente, vorzugsweise Keile aufweisen. Von den Keilen sind etwa beidseitig zwölf pro Ring gleichmäßig verteilt. Diese Keile verstärken und optimieren die Funktionen im Rahmen des Rück- und Vorverdichtens zusätzlich. Was die Formgebung der Keile betrifft, ist daran gedacht, dass die Keile als Trapez ausgebildet sind, das sich über die komplette Tiefe der Ringe auf der Walze erstreckt. Die längere Grundseite des Trapezes fällt folglich mit der Innenkante des Rings bzw. mit dem Übergang Ring/Walze zusammen, die kürzere Grundseite des Trapezes mit der spitz zulaufenden Außenkante des Rings.

Eine weitere vorteilhafte Ausführungsform der Erfindung sieht vor, dass die Walze zwei mittig zueinander beabstandete Teilwalzen oder eine mittige Ausnehmung aufweist, in deren Bereich die Düngerschare zumindest mit ihrem rückwärtigen Ende hineinragen. D. h zwei Teilwalzen zueinander oder die zentrale Ausnehmung in der Walze sind so positioniert und dimensioniert, dass die paarweise angeordneten Düngerschare und die Ausnehmung in der Walze der Abstand zwischen den beiden Teilwalzen ein Stück weit ineinander greifen. Dies führt zu einem gewissen Reinigungseffekt bzw. zur Verhinderung von Erdreichanlagerungen in diesem Bereich. Ergänzend dazu ist vorgesehen, dass die Walze an ihre mittige Ausnehmung angrenzend beidseitig oder die Teilwalze an ihrer Innenseite einen Ring aufweist. Von außen nach innen betrachtet ist dieses Arbeitsgerät also so aufgebaut, dass außen ein normaler Walzenabschnitt angeordnet ist, an den sich ein Ring und dann innen die Ausnehmung anschließt.

Eine zusätzliche Ausführungsform der Erfindung sieht vor, dass der Walze eine Anordnung von vorzugsweise zwei Doppelscheibenscharen nachläuft, wobei der im Boden wirksame Bereich der Doppelscheibenschare in etwa den gleichen mittleren Abstand in seitlicher Richtung aufweist wie der mittlere Abstand der Ringe.

Zur ergänzenden Anordnung eines Säherzes ist vorgesehen, dass ein Säherz jeweils einer Reiheneinheit mit zwei Doppelscheibenscharen zugeordnet ist, vorzugsweise dass ein gemeinsames Säherz jeweils einem Paar von Doppelscheibenscharen zugeordnet ist. Insbesondere, um das Saatgut einzeln und in gleichmäßigen Abständen in den Boden einbringen zu können, empfiehlt es sich, wenn die Vereinzelungsvorrichtung durch ein Paar an ihrem Außenrand miteinander verbundener Vereinzelungsteller gebildet ist, die zur Erzeugung einer gespreizten Saatgutreihe in tangentialer Richtung versetzt zueinander angeordnet und separaten Auslässen zur Abführung des Saatgutes aus dem Säherz in Richtung Säschar zugeordnet sind. Eine gespreizte Saatgutreihe erklärt sich dadurch, dass in dieser Reihe abgelegte Saatgutkörner neben einem annähernd gleichmäßigen Längsabstand einen definierten, rechts und links wechselnden lateralen Abstand zur Reihenmitte aufweisen.

Wenn der mittige Abstand der Auslässe und/oder der daran angeschlossenen Leitungen zumindest annähernd dem lateralen Abstand der gespreizten Saatgutreihe entspricht, wird das Saatgut vorzugsweise senkrecht nach unten und dabei ohne nennenswerte Kollisionen mit der Auslass- oder Leitungsinnenwand in den Bereich der Saatgutablage geführt. Die Richtungsumkehr des Saatgutes innerhalb der Auslassleitung wird auf ein Minimum reduziert und vermeidet unnötige Kollisionsverzögerungen während des Saatguttransportes, wodurch zugleich die Ablagegenauigkeit innerhalb der Saatgutreihe deutlich gesteigert wird.

Die Erfindung zeichnet sich insbesondere dadurch aus, dass eine Scharanordnung speziell für eine pneumatische Einzelkornsämaschine geschaffen ist, bei der das unerwünschte Eindringen von Erdreich in die Baugruppe aus Doppelscheibenscharen und Tiefenführungsrolle weitestgehend ausgeschlossen werden kann. Dank der Positionierung der Tiefenführungsrolle in Fahrtrichtung betrachtet zwischen den beiden Scheibenscharen und der Anordnung der Achse des Doppelscheibenschars innerhalb des Umfangs der Tiefenführungsrolle - oder umgekehrt - kommt es zu einem Gleichlauf zwischen den Scharen und der Tiefenführungsrolle in dieselbe Richtung und zu keinem konstruktionsbedingten Eindringen von Erdreich in diesen Bereich mehr.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: den Abschnitt einer Sämaschine mit den für die Erfindung besonderen Aggregaten in Seitenansicht,
- Figur 2: eine Ansicht der Aggregate von unten,
- Figur 3: einen Ausschnitt zu Figur 2,
- Figur 4: einen Ausschnitt aus Figur 1 und
- Figur 5: eine bevorzugte Scharanordnung.

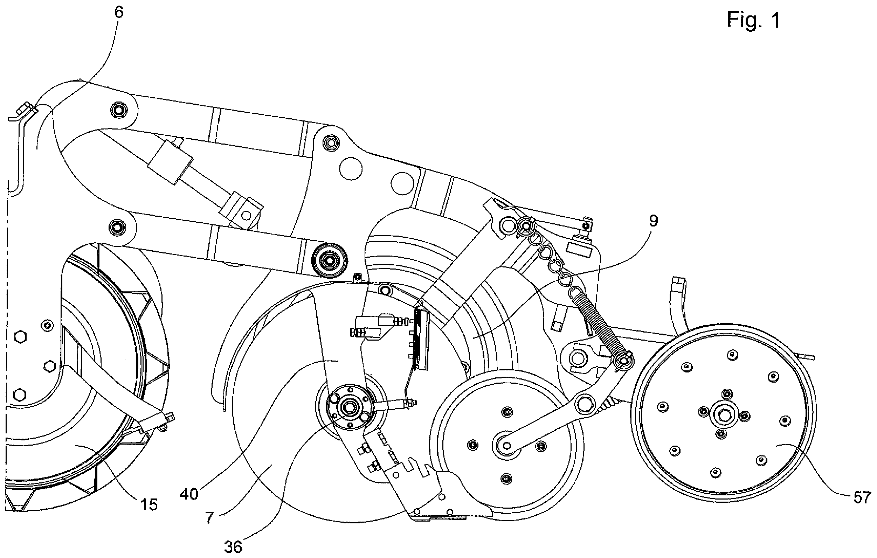

Figur 1 zeigt in Seitenansicht die für die Erfindung wichtigen Aggregate in Form des an dem Schararm 40 gelagerten, als Doppelscheibenschar 7 ausgebildeten Säschars, das drehbar um die Achse 36 gelagert ist und die praktisch auf gleicher Höhe angeordnete Tiefenführungsrolle 9. Vor dieser Baueinheit aus Doppelscheibenscharen 7, 8 und Tiefenführungsrolle 9 ist an dem Rahmen 6 das als Walze 15 ausgebildete Arbeitsgerät 14 zu erkennen, dahinter die Anpressrolle 57.

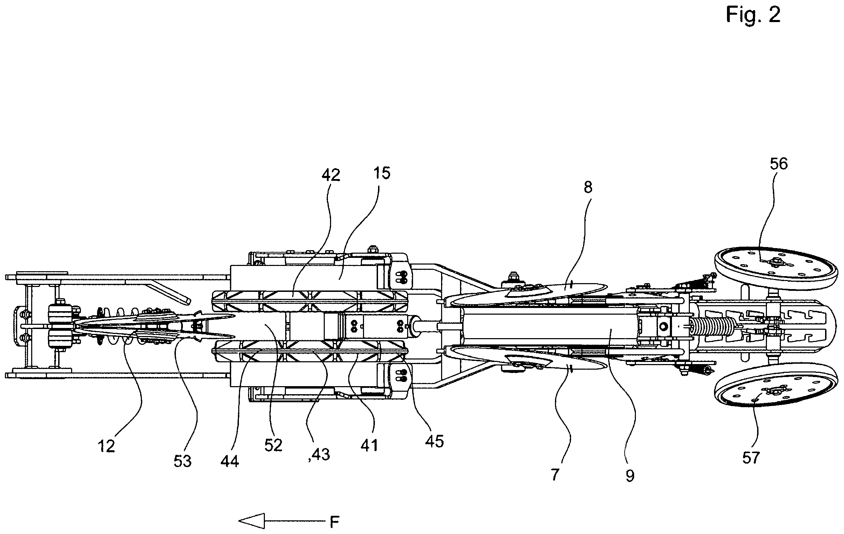

In Figur 2 ist dieses Ensemble mit Hinweis auf die Fahrtrichtung F in Ansicht von unten dargestellt, auch mit einem Blick auf den Übergang zwischen Düngerschar 12 und Walze 15. Letztere weist eine zentrale Ausnehmung 52 auf, die zur Aufnahme des rückwärtigen Endes 53 der Düngerschare 12 dient, um einen gegenseitigen Reinigungseffekt zu gewährleisten und auch hier Ansammlungen von Erdreich weitestgehend auszuschließen. An die Ausnehmung 52 schließt sich beidseitig ein Ring 41, 42 an. Von diesen Ringen 41, 42 betrachtet nach außen schließt sich dann die "eigentliche" Walze 15 mit gegenüber den Ringen 41, 42 verringertem Durchmesser an. Im hinteren Bereich dieser Anordnung finden sich die Doppelscheibenschare 7, 8 mit der dazwischen positionierten Tiefenführungsrolle 9. Mit den Bezugszeichen 56 und 57 sind noch die Andruckrollen als abschließende Werkzeuge bezeichnet.

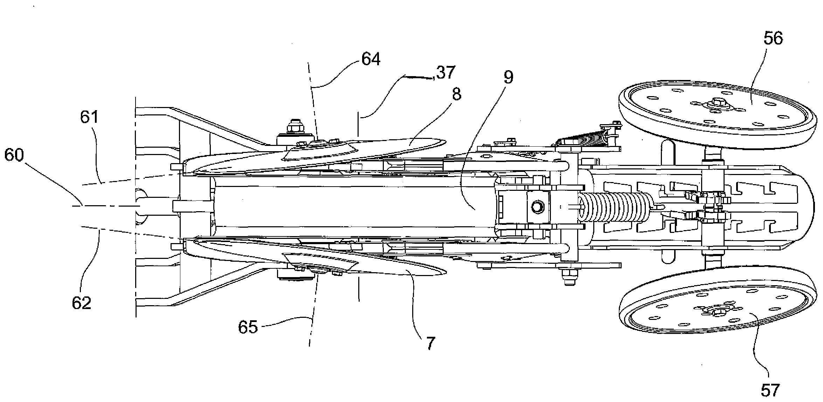

Besser gezeigt ist dieser Geräteabschnitt noch in Figur 3. Die beiden Doppelscheibenschare 7 und 8 sind in Fahrtrichtung nach vorne schräg positioniert, entsprechend sind die Achsen 64, 65 der Doppelscheibenschare 7, 8 bzw. die Achse 37 der Tiefenführungsrolle 9 positioniert. Der Winkel, in dem die Doppelscheibenschare 7, 8 angeordnet sind, entspricht auch dem der Längsachse 60 des Geräteabschnitts zu den beiden Längsachsen 61 und 62 der Doppelscheibenschare 7 und 8.

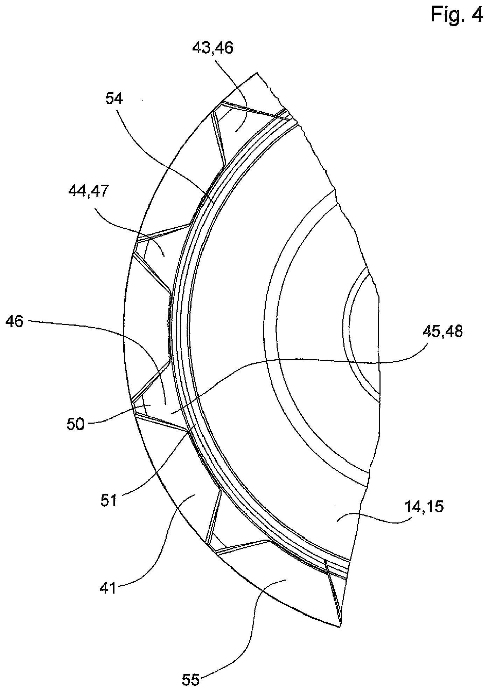

Eine vergrößerte Darstellung von Walze, Ringen und Keilen findet sich in Figur 4. Über den eigentlichen Umfang 54 der Walze 15 erstreckt sich der spitz zulaufende Ring 41 mit einer Vielzahl von hier beispielhaft mit den Bezugszeichen versehenen Keilen 43, 44 und 45. Solch ein Trapez 46, 47, 48 erstreckt sich von seiner längeren Grundseite/Innenkante 51 nach außen spitz zulaufend zu seiner kürzeren Grundseite/Außenkante 50, die wiederum mit dem äußeren Rand 55 des Rings 41 zusammenfällt.

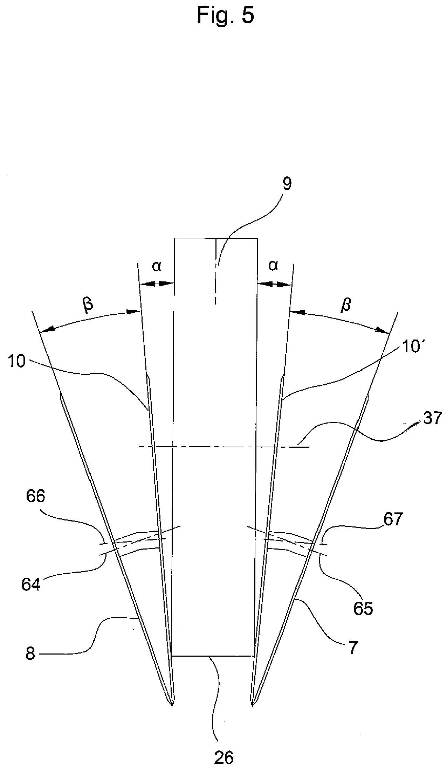

Schließlich ist in Figur 5 eine weitere Scharanordnung schematisch wie in Figur 3 von unten gezeigt, bei der die Tiefenführungsrolle 9 und die beiden Doppelscheibenschare 7, 8, genauer gesagt deren beiden inneren Schare 10, 10' sich am vorderen Ende 26 der Tiefenführungsrolle 9 berühren, so dass ein gegenseitiger Antrieb durch den gleichen Drehsinn möglich ist. Eine Winkelstellung sieht dabei einen Freiwinkel α zwischen Tiefenführungsrolle und Doppelscheibenschar von nur 0,5° bis 5,0° vor, welche dem Winkel der Lagerachsen 66, 67 der inneren Scheibenschare zur Achse 37 der Tiefenführungsrolle entspricht. Die Freiwinkel-Ebene, welche durch die Winkel α aufgespannt wird, kann dabei sowohl horizontal, wie dargestellt, als auch vertikal verlaufen. Dabei zeigen die Geraden, welche die Winkel α in ihrem Schnittpunkt aufspannen, vorzugsweise nach vorne oder nach unten. Noch besser geeignet ist eine Ausrichtung in Fahrtrichtung nach schräg unten. Die Ausrichtung der Lagerachsen 64 zu 66 bzw. 65 zu 67 entspricht dem Öffnungswinkel β des jeweiligen Doppelscheibenschares 7, 8.

## Patentansprüche

1. Anordnung von zwei Doppelscheibenscharen (7, 8) und einer Tiefenführungsrolle (9) an einem Rahmen (6) einer pneumatischen Einzelkornsämaschine, wobei die Tiefenführungsrolle (9) in Fahrtrichtung betrachtet zwischen den beiden Doppelscheibenscharen (7, 8) angeordnet ist, wobei die beiden Doppelscheibenschare (7, 8) und die Tiefenführungsrolle (9) eine Drehbewegung in selber Richtung ausüben und die Tiefenführungsrolle (9) und die beiden benachbarten Doppelscheibenschare (7, 8) sich zumindest annähernd berührend angeordnet oder ausgebildet sind,
**dadurch gekennzeichnet,**
**dass** die Tiefenführungsrolle (9) und die inneren Schare (10) der beiden benachbarten Doppelscheibenschare (7, 8) sich am vorderen Ende (26) der Tiefenführungsrolle (9) zumindest annähernd berührend angeordnet oder ausgebildet sind, wobei die Achse (36) des Doppelscheibenschars (7, 8) innerhalb des Umfangs der Tiefenführungsrolle (9) liegt oder die Achse (37) der Tiefenführungsrolle (9) innerhalb des Umfangs des Doppelscheibenschars (7, 8) liegt.

2. Anordnung nach Anspruch 1,
**dadurch gekennzeichnet,**
**dass** der Freiwinkel (α) zwischen Tiefenführungsrolle (9) und Doppelscheibenschar (7, 8) 0,5° bis 5,0° beträgt.

3. Anordnung nach Anspruch 1,
**dadurch gekennzeichnet,**
**dass** die Achse (36) des Doppelscheibenschars (7, 8) und die Achse (37) der Tiefenführungsrolle (9) in Fahrtrichtung betrachtet zumindest annähernd auf einer Höhe liegen.

4. Anordnung nach Anspruch 1, **dadurch gekennzeichnet,**
**dass** die Doppelscheibenscharpaare (7, 8) schräg zur Fahrtrichtung angestellt angeordnet sind.

5. Anordnung nach Anspruch 4, **dadurch gekennzeichnet,**
die beiden ein Doppelscheibenschar (7, 8) bildenden Scheiben in einem unterschiedlichen Neigungsgrad zueinander und/oder zur Fahrtrichtung angestellt angeordnet sind.

6. Anordnung nach Anspruch 4, **dadurch gekennzeichnet,**
**dass** die inneren Scheiben der jeweiligen Doppelscheibenschare (7,8) annähernd parallel zur Rotationsebene der Tiefenführungsrolle (9) angeordnet sind.

7. Anordnung nach Anspruch 1, **dadurch gekennzeichnet,**
**dass** zwischen einer Düngerschar (12) und Doppelscheibenschar (7, 8) ein als Walze (15) oder Rolle ausgebildetes Arbeitsgerät (14) angeordnet ist, welches zum Schließen des Düngerschar-Schlitzes sowie zur Rückverfestigung des durch das Düngerschar (12) aufgeworfenen Erdreichs ausgebildet ist.

8. Anordnung nach Anspruch 7, **dadurch gekennzeichnet,**
**dass** das Arbeitsgerät (14) zur Vorverdichtung von Erdreich vor dem Doppelscheibenschar (7, 8) ausgebildet ist.

9. Anordnung nach Anspruch 7, **dadurch gekennzeichnet,**
**dass** das Arbeitsgerät (14) als Tiefenführungseinrichtung für die Einzelkornsämaschine ausgebildet ist.

10. Anordnung nach Anspruch 7, **dadurch gekennzeichnet,**
**dass** das Arbeitsgerät (14) als Walze (15) mit einer Mehrzahl von über den Umfang (54) der Walze (15) überstehenden, parallelen Ringen (41, 42) ausgerüstet ist.

11. Anordnung nach Anspruch 10, **dadurch gekennzeichnet,**
**dass** die Ringe (41, 42) mehrere über ihren Umfang verteilt angeordnete und sich in deren Axialrichtung erstreckende Bodenantriebselemente, vorzugsweise Keile (43, 44, 45) aufweisen, die als Trapez (46, 47, 48) ausgebildet sind, das sich über die komplette Tiefe der Ringe (41, 42) erstreckt.

12. Anordnung nach Anspruch 7, **dadurch gekennzeichnet,**
**dass** die Walze (15) zwei mittig zueinander beabstandete Teilwalzen oder eine mittige Ausnehmung (52) aufweist, in deren Bereich die Düngerschare (12) zumindest mit ihrem rückwärtigen Ende (53) hineinragen.

13. Anordnung nach Anspruch 10, **dadurch gekennzeichnet,**
**dass** der Walze (15) eine Anordnung von vorzugsweise zwei Doppelscheibenscharen (7, 8) nachläuft, wobei der im Boden wirksame Bereich der Doppelscheibenschare (7, 8) in etwa den gleichen mittleren Abstand in seitlicher Richtung aufweist wie der mittlere Abstand der Ringe (41, 42).

14. Anordnung nach Anspruch 1, **dadurch gekennzeichnet,**
**dass** ein Säherz jeweils einem Doppelscheibenschar (7, 8) zugeordnet ist.

15. Anordnung nach Anspruch 1, **dadurch gekennzeichnet,**
**dass** ein gemeinsames Säherz jeweils einem Paar von Doppelscheibenscharen (7, 8) zugeordnet ist.

16. Anordnung nach Anspruch 15, **dadurch gekennzeichnet,**
**dass** der mittige Abstand der Auslässe des gemeinsamen Säherzens und/oder der daran angeschlossenen Leitungen zumindest annähernd dem lateralen Abstand der durch die zwei Doppelscheibenschare (7, 8) erzeugten gespreizten Saatgutreihe entspricht.

## Claims

1. Arrangement of two double disc coulters (7, **8)** and a depth control wheel **(9)** at the frame (6) of a pneumatic precision seed drill, whereby the depth control wheel **(9)** seen from the direction of travel is located between the two double disc coulters **(7,8),** whereby the two double disc coulters **(7, 8)** and the depth control wheel **(9)** rotate in the same direction and the depth control wheel **(9)** and the two adjacent double disc coulters (7, **8)** are arranged or designed to be in contact with each other at least approximately
**characterised in that**
the depth control wheel **(9)** and the inner coulters **(10)** of the two adjacent double disc coulters **(7, 8)** are arranged or designed to be in contact with each other at least approximately at the front end **(26)** of the depth control wheel **(9)** whereby the axle **(36)** of the double disc coulter **(7, 8)** lies inside the circumference of the depth control wheel **(9)** or the axle **(37)** of the depth control wheel **(9)** lies inside the circumference of the double disc coulters **(7, 8).**

2. Arrangement in accordance with claim **1**
**characterised in that**
the clearance angle (α) between the depth control wheel **(9)** and the double disc coulter (7, **8)** is 0.5° to 5.0°.

3. Arrangement in accordance with claim **1**
**characterised in that**
seen from the direction of travel the axle **(36)** of the double disc coulters **(7, 8)** and the axle **(37)** of the depth control wheel **(9)** are at least approximately level.

4. Arrangement in accordance with claim **1**
**characterised in that**
the double disc coulter pairs **(7, 8)** are arranged slanted to the direction of travel.

5. Arrangement in accordance with claim 4,
**characterised in that**
the two discs forming a double disc coulter **(7. 8)** are arranged in a different angle of inclination to one another and/or to the direction of travel.

6. Arrangement in accordance with claim 4,
**characterised in that**
the inner discs of the respective double disc coulters **(7,8)** are arranged approximately parallel to the rotation level of the depth control wheel **(9).**

7. Arrangement its accordance with claim 1
**characterised in that**
an implement **(14)** build as a cylinder **(15)** or roller is arranged between the fertiliser coulter **(12)** and the double disc coulter **(7, 8)** that is designed to close the fertiliser coulter slot and for recompaction of the earth thrown up by the fertiliser coulter **(12).**

8. Arrangement in accordance with claim **7**
**characterised in that**
the implement **(14)** is designed for precompaction of soil in front of the double disc coulter **(7, 8).**

9. Arrangement in accordance with claim **7**
**characterised in that**
the implement **(14)** is designed as a depth guide device for the precision seed drill.

10. Arrangement in accordance with claim **7**
**characterised in that**
the implement **(14)** as cylinder **(15)** is fitted with a number of parallel rings **(41, 42)** extending over the circumference **(54)** of the cylinder **(15).**

11. Arrangement in accordance with claim **10**
**characterised in that**
the rings **(41. 42)** have several ground drive elements, preferably wedges **(43, 44, 45),** distributed over their circumference and extending in their axial direction, which are designed as trapezoids **(46, 47, 48)** that extend over the full depth of the rings **(41, 42).**

12. Arrangement in accordance with claim **7,**
**characterised in that**
the cylinder **(15)** comprises two centrally spaced part cylinders or a central recess **(52),** into whose area the fertiliser coulters **(12)** extend at least with their rearward end **(53).**

13. Arrangement in accordance with claim **10,**
**characterised in that**
the cylinder **(15)** follows an arrangement of preferably two double disc coulters **(7, 8),** whereby the area of the double disc coulters **(7, 8)** that is effective in the soil has about the same mean spacing to the side as the mean spacing of the rings **(41, 42).**

14. Arrangement in accordance with claim **1**
**characterised in that**
a seeding heart **(1)** is allocated each to a double disc coulter **(7, 8).**

15. Arrangement in accordance with claim **1**
**characterised in that**
a joint seeding heart **(1)** is allocated each to a pair of double disc coulters **(7, 8).**

16. Arrangement in accordance with claim **15**
**characterised in that**
the middle spacing of the outlets of the joint seeding heart and/or of the pipes connected to the outlets corresponds at least approximately to the lateral clearance of the spread seed furrow created by the two double disc coulters (7,8).

## Revendications

1. Disposition de deux socs à doubles disques (7, 8) et d'un rouleau de guidage en profondeur (9) sur un châssis (6) d'un semoir mono-graine pneumatique, le rouleau de guidage en profondeur (9) étant disposé entre les deux socs à doubles disques (7, 8), vu dans le sens du déplacement, les deux socs à doubles disques (7, 8) et le rouleau de guidage en profondeur (9) effectuant un mouvement de rotation dans le même sens et le rouleau de guidage en profondeur (9) et le deux socs à doubles disques (7, 8) adjacents étant disposés ou étant conçus de façon à se toucher au moins approximativement,
**caractérisée en ce que**
le rouleau de guidage en profondeur (9) et les socs internes (10) des deux socs à doubles disques (7, 8) adjacents sont disposés ou conçus de façon à se toucher au moins approximativement au niveau de l'extrémité avant (26) du rouleau de guidage en profondeur (9), l'axe (36) du soc à double disque (7, 8) se trouvant à l'intérieur de la circonférence du rouleau de guidage en profondeur (9) ou l'axe (37) du rouleau de guidage en profondeur (9) se trouvant à l'intérieur de la circonférence du soc à double disque (7, 8).

2. Disposition selon la revendication 1,
**caractérisée en ce que**
l'angle libre (α) entre le rouleau de guidage en profondeur (9) et le soc à double disque (7, 8) est de 0,5° à 5,0°.

3. Disposition selon la revendication 1,
**caractérisée en ce que**
l'axe (36) du soc à double disque (7, 8) et l'axe (37) du rouleau de guidage en profondeur (9) se trouvent au moins approximativement en hauteur, vu dans le sens de déplacement.

4. Disposition selon la revendication 1,
**caractérisée en ce que**
les socs à doubles disques (7, 8) sont disposés de manière oblique par rapport au sens du déplacement.

5. Disposition selon la revendication 4,
**caractérisée en ce que**
les deux disques constituant un soc à double disque (7, 8) étant disposés avec un angle d'inclinaison différent entre eux et/ou par rapport au sens du déplacement.

6. Disposition selon la revendication 4,
**caractérisée en ce que**
les disques internes des socs à doubles disques (7, 8) sont disposés au moins approximativement parallèlement au plan de rotation du rouleau de guidage en profondeur (9).

7. Disposition selon la revendication 1,
**caractérisée en ce que**
entre un soc fertiliseur (12) et un soc à double disque (7, 8), est disposé un outil (14) conçu comme un cylindre (15) ou un rouleau, qui est conçu pour la fermeture de la fente du soc fertiliseur ainsi que pour la reconsolidation de la terre soulevée par le soc fertiliseur (12).

8. Disposition selon la revendication 7,
**caractérisée en ce que**
l'outil (14) est conçu pour le pré-compactage de la terre avant le soc à double disque (7, 8).

9. Disposition selon la revendication 7,
**caractérisée en ce que**
l'outil (14) est conçu comme un dispositif de guidage en profondeur pour le semoir mono-graine.

10. Disposition selon la revendication 7,
**caractérisée en ce que**
l'outil (14) est équipé, en tant que cylindre (15), d'une pluralité de bagues (41, 42) parallèles, dépassant de la circonférence (54) du cylindre (15).

11. Disposition selon la revendication 10,
**caractérisée en ce que**
les bagues (41, 42) comprennent plusieurs éléments d'entraînement au sol répartis sur leur circonférence et s'étendant dans sa direction axiale, de préférence des cales (43, 44, 45), qui présentent la forme d'un trapèze (46, 47, 48), qui s'étend sur toute la profondeur des bagues (41, 42).

12. Disposition selon la revendication 7,
**caractérisée en ce que**
le cylindre (15) comprend deux cylindres partiels écartés entre eux de manière centrale ou un évidement central (52) au niveau duquel les socs fertiliseurs (12) dépassent au moins avec leur extrémité arrière (53).

13. Disposition selon la revendication 10,
**caractérisée en ce que**
après le cylindre (15), se trouve une disposition avec de préférence deux socs à doubles disques (7, 8), la partie active dans le sol des socs à doubles disques (7, 8) présentant approximativement la même distance moyenne dans la direction latérale que la distance moyenne entre les bagues (41, 42).

14. Disposition selon la revendication 1,
**caractérisée en ce que**
un distributeur de semis correspond à chaque soc à double disque (7, 8).

15. Disposition selon la revendication 1,
**caractérisée en ce que**
un distributeur de semis commun correspond à une paire de socs à doubles disques (7, 8).

16. Disposition selon la revendication 15,
**caractérisée en ce que**
la distance centrale entre les sorties du distributeur de semis commun et/ou les conduites qui y sont raccordées correspond approximativement à la distance latérale de la rangée de semis produite par les deux socs à doubles disques (7, 8).
